# EUROPÄISCHE PATENTANMELDUNG

(11) **EP 0 845 606 A1**
(43) Veröffentlichungstag der Anmeldung: **03.06.1998**
(21) Anmeldenummer: 97112109.0
(22) Anmeldetag: 16.07.1997
(51) Int. Cl.: F16B 13/12

(54) **Befestigungselement**

(30) Priorität: 27.11.1996 DE 29620619 U
(71) Anmelder: BTS Befestigungselemente Technik und Vertrieb GmbH & Co. KG, 45731 Waltrop (DE)
(72) Erfinder: Draht, Rüdiger, 58730 Fröndenberg (DE)
(74) Vertreter: Patentanwälte Meinke, Dabringhaus und Partner

(57) **Zusammenfassung**

Bei einem Befestigungselement, insbesondere Dübel, mit einer einstückigen Hülse in Form eines Spreizdübels und einem in die Hülse einschlagbaren Spreizstift aus Metall, soll eine Lösung geschaffen werden, mit der bei Aufrechterhaltung der Vorteile des Einsatzes von Metallstiften die bisherigen Nachteile, insbesondere die Korrosionsanfälligkeit und das Bilden einer Kältebrücke, vermieden werden.

Dies wird dadurch erreicht, daß der Spreizstift (5) kürzer als die Hülse (13) ist und im eingeschlagenen Zustand nicht bis zum Kopf (10) der Hülse (13) reicht und daß ein zusätzlicher, in die Hülse einzuschlagender, den Metallstift (5) beaufschlagender Kunststoffvortriebskörper (7) vorgesehen ist.

## Beschreibung

Die Erfindung betrifft ein Befestigungselement, insbesondere Dübel, mit einer einstückigen Hülse in Form eines Spreizdübels und einem in die Hülse einschlagbaren Spreizstift aus Metall.

Dübel zur Befestigung von Gegenständen an einer Unterkonstruktion, beispielsweise zur Befestigung von wärme- und/oder schallisolierenden Platten an Außenmauerwerken sind in vielfältiger Form bekannt. Beispielsweise besteht ein derartiges Befestigungselement, das aus der DE-27 12 148-A1 bekannt ist, aus einem Dübel, einer Schraube und einer schlauchartigen Hülle, wobei die Hülle die Schraube in einem Bereich umgibt, in dem sie ein zu befestigendes Plattenteil durchgreift. Dabei bildet die Hülle einen Korrosionsschutz im Bereich des Schraubenschaftes. Diese Decke geht auch im Bereich des Schraubenkopfes nicht ab, so daß dieser korrosionsgefährdet ist. Außerdem bildet die Schraube eine wärmeleitende Brücke, was insbesondere bei Außenwandmontagen von großem Nachteil ist.

Auf der anderen Seite kann auf den Einsatz von Metallstiften unter anderem aus Brandschutzgründen nicht völlig verzichtet werden.

Aufgabe der Erfindung ist es daher, eine Lösung zu schaffen, mit der bei Aufrechterhaltung der Vorteile des Einsatzes von Metallstiften die bisherigen Nachteile, insbesondere die Korrosionsanfälligkeit und das Bilden einer Kältebrücke, vermieden werden.

Diese Aufgabe wird gemäß der Erfindung dadurch gelöst, daß der Spreizstift kürzer als die Hülse ist und im eingeschlagenen Zustand nicht bis zum Kopf der Hülse reicht und daß ein zusätzlicher, in die Hülse einzuschlagender, den Metallstift beaufschlagender Kunststoffvortriebskörper vorgesehen ist.

Bei einem derartigen Befestigungselement reicht der Spreizstift im eingeschlagenen Zustand nicht bis zum Kopf der Hülse, sondern beispielsweise nur bis zur Hälfte. Er sorgt damit im vorderen Bereich eines Dübels für eine zuverlässige Spreizung, während er im oberen Bereich der Hülse keine Kältebrücke nach außen bildet. Er ist auch so weit vom Kopf der Hülse entfernt, daß keine Korrosionsgefahr mehr besteht. Mit dem zusätzlichen Kunststoffvortriebskörper wird der zunächst lose in der Hülse steckende Spreizstift vorgetrieben, der Kunststoffvortriebskörper entspricht in seiner Länge und Dimensionierung dem eingesparten Teilstück eines herkömmlichen, in seiner vollen Länge aus Metall gebildeten Spreizstiftes und schließt im eingeschlagenen Zustand mit seiner Aufschlagfläche mit dem Kopf der Hülse ab.

Vorzugsweise ist der Kunststoffvortriebskörper zylindrisch ausgebildet und liegt mit seiner Oberfläche dichtend an der Innenwand der Hülse an. Hiermit wird ein hermetischer Abschluß des Befestigungselementes nach außen erreicht, es verbleibt kein Spalt, durch den Kälte oder Feuchtigkeit nach innen dringen könnte. Der mittels des Vortriebskörpers eingeschlagene Metall-Spreizstift ist zuverlässig vor Korrosion geschützt.

In einer alternativen Ausführungsform ist vorgesehen, daß der Kunststoffvortriebskörper konisch ausgebildet ist und an seiner breitesten Stelle dichtend an der Innenfläche der Hülse im eingeschlagenen Zustand anliegt und die Hülsenbohrung nach außen abschließt. Dies erleichtert ggf. das Einschlagen des Kunststoffvortriebskörpers bei gleichzeitiger Aufrechterhaltung der Abdichtungsfunktion.

In weiterer vorteilhafter Ausgestaltung ist vorgesehen, daß das Befestigungselement zur Befestigung von wärme- und/oder schallisolierenden Platten an einer Unterkonstruktion eine an den Hülsenkopf angespritzte großflächige Druckplatte aus Kunststoff aufweist. Eine derartige Druckplatte erleichtert das Anbringen insbesondere von Isolationsplatten und verteilt die Haltekräfte auf eine größere Oberfläche.

Vorteilhaft ist es auch, daß der Metallstift in Einschlagrichtung gesehen angespitzt ist. Hierdurch wird das Vorantreiben des Metallstiftes und das Aufspreizen des Dübels erleichtert.

Weiter ist vorgesehen, daß der Kopf des Kunststoffvortriebskörpers in der Montagelage mit dem Dübelkopf fluchtend ausgebildet ist. Hierdurch ergibt sich eine glatte Oberfläche zwischen dem Dübelkopf einerseits und dem Kopf des Kunststoffvortriebskörpers andererseits, was insbesondere dann von Vorteil ist, wenn anschließend auf die Isolationsplatten ein Putz od. dgl. aufgebracht werden soll.

In weiterer Ausgestaltung ist im Bereich des Kopfes des Kunststoffvortriebskörpers wenigstens eine Sollbruchstelle vorgesehen. Hiermit kann der überstehende Teil des Kunststoffvortriebskörpers abgeschlagen oder abgekniffen werden, wenn sich der Metallstift nicht so weit einschlagen läßt, daß der Kopf des Kunststoffvortriebskörpers fluchtend mit dem Dübelkopf abschließt und in jedem Fall wird nach dem Entfernen des überstehenden Teiles des Kunststoffvortriebskörpers wieder eine glatte Oberfläche erreicht.

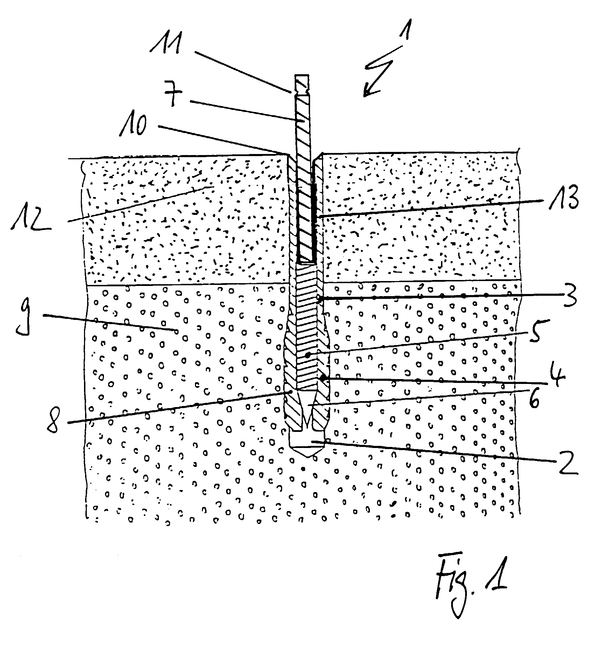

Die Erfindung ist nachstehend anhand der Zeichnung beispielsweise näher erläutert. Diese zeigt in der einzigen Figur einen Querschnitt durch ein erfindungsgemäßes Befestigungselement in der Montagelage.

Ein erfindungsgemäßes, allgemein mit 1 bezeichnetes Befestigungselement weist zunächst einen in ein Bohrloch 2 einzusetzenden Dübel 3 auf, der in seinem vorderen Bereich 4 als Spreizdübel ausgebildet ist. In den Spreizbereich 4 des Dübels 3 wird ein Metall-Spreizstift 5 mit einer angeschrägten Spitze 6 mittels eines erfindungsgemäßen Kunststoffvortriebskörpers 7 eingetrieben, so daß die Seitenflanken 8 des Spreizdübels 4 auseinandergetrieben und in das umgebende Mauerwerk 9 gepreßt werden. Kunststoffvortriebskörper 7 und Metallspreizstift 5 werden so weit eingetrieben, daß der Kopf des Kunststoffvortriebskörpers 7 nach Möglichkeit mit dem Dübelkopf 10 fluchtend abschließt. Ist dies nicht möglich, weil der Kunststvortriebskörper 7 zu lang ist oder das Bohrloch 2 nicht tief genug ist, so daß die Metallspitze 6 am Boden der Sackbohrung 2 anschlägt, kann der überstehende Teil des Kunststoffvortriebskörpers 7 über eine Sollbruchstelle 11 abgetrennt, d.h. beispielsweise abgeschlagen oder abgekniffen, werden, so daß der zu lange Teil des Kunststoffvortriebskörpers 7 in der Montagelage nicht übersteht.

Im dargestellten Ausführungsbeispiel ist der Dübel 3 nicht bis zum Kopf 10 in ein Mauerwerk 9 eingesetzt, sondern reicht nur mit seinem Spreizbereich 4 in das Mauerwerk 9 hinein. Der obere Hülsenschaft 13 durchsetzt ein anderes, an dem Mauerwerk 9 zu befestigendes Material 12, beispielsweise eine Wärme- und/oder schallisolierende Platte, wobei zum besseren Halt derselben an den Dübelkopf 10 noch eine in der Zeichnung nicht näher dargestellte großflächige Druckplatte aus Kunststoff angespritzt sein kann.

Weitere Ausgestaltungen der Erfindung sind möglich, ohne den Grundgedanken zu verlassen. Insbesondere ist es auch möglich, den Kunststoffvortriebskörper aus einem anderen Material als Kunststoff zu bilden. Wesentlich ist nur, daß der in den Spreizbereich 4 vorzutreibende Metall-Spreizstift 5 nicht bis zum Kopf 10 der Hülse 13 reicht, sondern aus einem anderen, nicht rostenden Material gebildet ist, um eine Korrosion und die Bildung einer Kältebrücke zu vermeiden.

## Patentansprüche

1. Befestigungselement, insbesondere Dübel, mit einer einstückigen Hülse in Form eines Spreizdübels und einem in die Hülse einschlagbaren Spreizstift aus Metall,
dadurch gekennzeichnet,
daß der Spreizstift (5) kürzer als die Hülse (13) ist und im eingeschlagenen Zustand nicht bis zum Kopf (10) der Hülse (13) reicht und daß ein zusätzlicher, in die Hülse einzuschlagender, den Metallstift (5) beaufschlagender Kunststoffvortriebskörper (7) vorgesehen ist.

2. Befestigungselement nach Anspruch 1,
dadurch gekennzeichnet,
daß der Kunststoffvortriebskörper (7) zylindrisch ausgebildet ist und mit seiner Oberfläche dichtend an der Innenwand der Hülse (13) anliegt.

3. Befestigungselement nach Anspruch 1,
dadurch gekennzeichnet,
daß der Kunststoffvortriebskörper (7) konisch ausgebildet ist und an seiner breitesten Stelle dichtend an der Innenfläche der Hülse (13) im eingeschlagenen Zustand anliegt und die Hülsenbohrung nach außen abschließt.

4. Befestigungselement nach Anspruch 1 oder einem der folgenden Ansprüche,
dadurch gekennzeichnet,
daß dieses zur Befestigung von wärme- und/oder schallisolierenden Platten (12) an einer Unterkonstruktion (9) eine an den Hülsenkopf (10) angespritzte großflächige Druckplatte aus Kunststoff aufweist.

5. Befestigungselement nach Anspruch 1 oder einem der folgenden Ansprüche,
dadurch gekennzeichnet,
daß der Metallstift (5) in Einschlagrichtung gesehen angespitzt ist.

6. Befestigungselement nach Anspruch 1 oder einem der folgenden Ansprüche,
dadurch gekennzeichnet,
daß der Kopf des Kunststoffvortriebskörpers (7) in der Montagelage mit dem Dübelkopf (10) fluchtend ausgebildet ist.

7. Befestigungselement nach Anspruch 1 oder einem der folgenden Ansprüche,
dadurch gekennzeichnet,
daß im Bereich des Kopfes (10) des Kunststoffvortriebskörpers (7) wenigstens eine Sollbruchstelle (11) vorgesehen ist.
